# EUROPÄISCHE PATENTSCHRIFT

(11) **EP 1 250 372 B1**
(45) Veröffentlichungstag und Bekanntmachung des Hinweises auf die Patenterteilung: **22.09.2004**
(21) Anmeldenummer: 01901185.7
(22) Anmeldetag: 22.01.2001
(51) Int. Cl.: C08G 18/67, C08G 18/68

(54) **VERFAHREN ZUR HERSTELLUNG RADIKALISCH NACHVERNETZTER POLYMERE**
METHOD FOR PRODUCING RADICALLY POST-CROSS-LINKED POLYMERS
PROCEDE DE PRODUCTION DE POLYMERES POST-RETICULES PAR VOIE RADICALAIRE

(30) Priorität: 28.01.2000 DE 10003749
(43) Veröffentlichungstag der Anmeldung: 23.10.2002
(73) Patentinhaber: Cognis Deutschland GmbH & Co. KG, 40589 Düsseldorf (DE)
(72) Erfinder: SULZBACH, Horst Dr., 27721 Ritterhude (DE); BEMMANN, Ralf, 41468 Neuss (DE); HÖFER, Rainer, 40477 Düsseldorf (DE); SKWIERCZ, Michael, 40764 Langenfeld (DE)
(86) Internationale Anmeldenummer: PCT/EP2001/000645
(87) Internationale Veröffentlichungsnummer: WO 2001/055240

(56) Entgegenhaltungen:
- US-A- 4 224 369
- DATABASE WPI Week 198810 Derwent Publications Ltd., London, GB; AN 1988-067036 XP002156075 & JP 63 020316 A (ARAKAWA KAGAKU), 28. Januar 1988 (1988-01-28)

## Beschreibung

### Gebiet der Erfindung

Die vorliegende Erfindung betrifft ein Verfahren zur Herstellung radikalisch nachvemetzter Polymere. Dabei werden ein oder mehrere spezielle Acryl- bzw. Methacrylsäurederivate auf Basis natürlich vorkommender Öle mit aromatischen und/oder aliphatischen Isocyanaten umgesetzt und die so erhaltenen Polyurethane anschließend einer radikalischen Nachvernetzung in Gegenwart eines Radikalinitiators unterworfen.

### Stand der Technik

Der Einsatz der Strahlungshärtung in der Beschichtungsindustrie zur Erzeugung hochwertiger Beschichtungsmaterialien ist aus dem Stand der Technik bekannt. Hier werden olefinisch ungesättigte Verbindungen (Monomere, Oligomere, Polymere, Prepolymere), also Verbindungen, die als Strukturelemente C=C-Doppelbindungen enthalten, durch Einwirkung energiereicher Strahlung, beispielsweise UV-Licht oder Elektronenstrahlung, ausgehärtet. Gelegentlich wird vor dieser eigentlichen Strahlungshärtung auch eine physikalische Trocknung vorgenommen.

Es ist auch bekannt, daß bei der Strahlungshärtung dann besonders hochwertige Beschichtungen erhalten werden, wenn die eingesetzten olefinisch ungesättigten Ausgangsverbindungen als weitere Strukturelemente Polyurethangruppen enthalten. Ungesättigte strahlenhärtbare Urethanacrylate sind bekannt aus: **Manfred Bock** **(Hrsg. Ulrich Zorll), "Polyurethane für Lacke und Beschichtungen" , Hannover 1999, Seite 73-74.**

**US-A-3,979,270** beschreibt ein Verfahren zur Aushärtung von Aminderivaten von Umsetzungsprodukten von acryliertem epoxidiertem Sojabohnenöl, wobei die Aushärtung durch energiereiche Strahlung erfolgt.

### Beschreibung der Erfindung

Aufgabe der vorliegenden Erfindung war die Bereitstellung eines Verfahrens zur Herstellung von Polymeren mit exzellenten Eigenschaften, insbesondere im Hinblick auf Schlagzähigkeit, ferner Hydrophobie, chemische Stabilität und Wasser- bzw. Wasserdampfbeständigkeit. Darüber hinaus sollten sich diese Polymeren durch ihre speziellen anwendungstechnischen Eigenschaften als Matrixmaterialien für Verbundwerkstoffe eignen.

Diese Aufgabe wurde überraschenderweise gelöst durch ein Verfahren, bei dem man OH-funktionelle, fettchemische Verbindungen, die Umsetzungsprodukte von epoxidierten Fettsäurestern und/oder epoxidierten Triglyceriden mit Acrylsäure und/oder Methacrylsäure darstellen und die dementsprechend sowohl ein oder mehrere Hydroxylgruppen als auch ein oder mehrere C=C-Doppelbindungen pro Molekül enthalten, mit aliphatischen und/oder aromatischen Isocyanaten - worunter im Rahmen der vorliegenden Erfindung alle dem Fachmann einschlägig bekannten Isocyanate, also Verbindungen, die ein oder mehrere -N=C=O - Gruppen enthalten, verstanden werden - umsetzt und anschließend eine radikalische Nachvemetzung der so erhaltenen Verbindungen - die im folgenden abkürzend als "Polyurethane" (a*) bezeichnet werden - in Gegenwart eines Radikalinitiators (b) durchführt.

Gegenstand der vorliegenden Erfindung ist ein **Verfahren** zur Herstellung radikalisch nachvemetzter Polymere, wobei man in erster Stufe ein oder mehrere Verbindungen (a), die Umsetzungsprodukte von epoxidierten Fettsäurestern und/oder epoxidierten Triglyceriden mit Acrylsäure und/oder Methacrylsäure sind, durch Umsetzung mit aliphatischen und/oder aromatischen Isocyanaten in die entsprechenden Polyurethane (a*) überführt und die so hergestellten Polyurethane (a*) anschließend in einer zweiten Stufe in Gegenwart mindestens eines Radikalinitiators (b) radikalisch nachvernetzt, wobei in der ersten Stufe eine Kombination mindestens einer Verbindung (a) mit mindestens einem Polyolester (c), der zwei oder mehr C=C-Doppelbindungen pro Molekül enthält, eingesetzt wird. Der Begriff "anschließend" bedeutet im Rahmen der vorliegenden Erfindung lediglich, das sich die zweite Stufe des erfindungsgemäßen Verfahrens an die erste Stufe anschließt. Mit diesem Begriff ist keine Einschränkung in zeitlicher Hinsicht verbunden. Die zweite Stufe des erfindungsgemäßen Verfahrens kann demnach sowohl unmittelbar im Anschluß an die erste Verfahrensstufe erfolgen, sie kann aber auch - abhängig von der gewünschten Anwendung - nach Lagerung des in der ersten Verfahrensstufe erhaltenen Zwischenproduktes (eines Polyurethans) erfolgen, wobei hinsichtlich der Lagerzeit keine prinzipiellen Einschränkungen bestehen.

Die Herstellung epoxidierter Fettsäurestem bzw. epoxidierten Triglyceride ist seit langem bekannt. Hierzu werden Ester von olefinisch ungesättigten Fettsäuren bzw. Triglyceriden, die als Fettsäurebausteine olefinisch ungesättigte Fettsäuren enthalten, der Epoxidation unterworfen, wobei eine oder mehrere Doppelbindungen pro Molekül in Oxirangruppen überführt werden.

Als Fettsäurebausteine der zu epoxidierenden Fettsäureester sind Carbonsäuren mit 12 bis 24 C-Atomen, die mindestens eine olefinische Doppelbindung im Molekül enthalten, bevorzugt. Bei den zu epoxidierenden Triglyceriden sind solche Triglyceride bevorzugt, bei denen mindestens ein Fettsäurebaustein pro Triglyceridmolekül mindestens eine olefinische Doppelbindung enthält.

Beispiele geeigneter epoxidierter Triglyceride sind die Epoxidationsprodukte folgender ungesättigter Öle: Sojaöl, Leinöl, Tallöl, Baumwollsaatöl, Erdnußöl, Palmöl, Sonnenblumenöl (alter und neuer Züchtung), Rüböl und Klauenöl. Die Herstellung geschieht insbesondere durch Umsetzung der genannten ungesättigten Öle mit Perameisen- oder Peressigsäure. Bevorzugt sind solche Triglyceride, die eine Jodzahl im Bereich von 50 bis 200 aufweisen, die bei weitgehender Epoxidation der olefinischen Doppelbindungen in Epoxide mit einem Gehalt von 3 bis 10 Gew.-% Epoxidsauerstoff überführt werden.

Besonders bevorzugte epoxidierte Triglyceride sind epoxidiertes Sojaöl (z.B. Handelsprodukt **"Edenol D 81"** der Cognis Deutschland GmbH - früher der Henkel KGaA) und epoxidiertes Leinöl (z.B. Handelsprodukt **"Edenol B 316"** der Cognis Deutschland GmbH - früher der Henkel KGaA).

Die Addition von Acryl- und/oder Methacrylsäure an die genannten epoxidierten Fettsäurester bzw. epoxidierten Triglyceride zu den Verbindungen (a) ist dem Fachmann an sich bekannt. Sie kann so erfolgen, daß die Oxiranringe ganz oder teilweise geöffnet werden. Bei teilweiser Ringöffnung ist es bevorzugt, daß man mindestens 50% der Oxiranringe öffnet. Besonders bevorzugt ist es jedoch, die Addition von Acryl- und/oder Methacrylsäure an die genannten epoxidierten Fettsäurester bzw. epoxidierten Triglyceride in der Weise durchzuführen, daß mehr oder weniger alle Oxiranringe geöffnet und in HO-CH₂-CH₂-OR-Gruppen überführt werden, in denen R einen Acrylat- bzw. Methacrylatrest bedeutet.

In einer besonders bevorzugten Ausführungsform der vorliegenden Erfindung setzt man als acryliertes Öl (a) das Ringöffnungsprodukt des epoxidierten Sojaöls mit Acrylsäure ein, welches eine Hydroxylzahl von etwa 158 mg KOH pro g Substanz hat. Zuerst erfolgt die Umsetzung dieses Acrylats mit aromatischen und/oder aliphatischen Isocyanaten, wobei bei den aliphatischen Isocyanaten vorzugsweise ein Katalysator eingesetzt wird, beispielsweise eine organische Zinnverbindung.

Ein oder mehrere (meth)acrylierte Verbindungen (a) werden gemäß dem erfindungsgemäßen Verfahren wie bereits gesagt einer 2-stufigen Behandlung unterworfen, nämlich
- zunächst einer Umsetzung mit aliphatischen und/oder aromatischen Isocyanaten
- und anschließend einer radikalischen Nachvernetzung der dabei erhaltenen Polyurethane (a*) in Gegenwart mindestens eines Radikalinitiators (b).

Die Wahl der **Isocyanate** unterliegt an sich keinen besonderen Einschränkungen. Prinzipiell lassen sich somit alle dem Fachmann einschlägig bekannten Isocyanate, also Verbindungen, die ein oder mehrere -N=C=O - Gruppen enthalten, einsetzen.

Vorzugsweise setzt man Diisocyanate, Oligo- bzw. Polyisocyanate, sowie Gemische dieser Verbindungen ein. Zu den Polyisocyanaten im Sinne der vorliegenden Erfindung gehören beispielsweise Addukte von Diisocyanaten an Trimethylolpropan, Biurete, Uretdione (cyclodimerisierte Isocyanate), Isocyanurate (cyclotrimerisierte Isocyanate), Allophanate, Carbodiimid-basierte Isocyanate und dergleichen (lediglich beispielhaft sei im Hinblick auf das Wissen des Fachmanns bezüglich der Diund Polyisocyanate verwiesen auf: **Ullmanns Encyklopädie der technischen Chemie, Band 19, 4. Auflage, Weinheim 1980, Seiten 302-304** sowie auf **Kirk-Othmer, Encyclopedia of Chemical Technology, 4th edition, New York 1995, Volume 14, Seiten 902-934)** sowie schließlich auf **Gerhard W.Becker [Hrsg.], Kunststoff-Handbuch, Band 7: "Polyurethane" [hrsg. Von Günter Oertel], 3. Aufl., München 1993, Seiten 11-21, 76-103).** Besonders hingewiesen sei auf handelsübliche Polyisocyanate, beispielsweise Polymer-MDI und dergleichen, die in verschiedenen Polymerisationsgraden kommerziell erhältlich sind.

Bei den Diisocyanaten setzt man vorzugsweise Verbindungen der allgemeinen Struktur O=C=N-X-N=C=O ein, wobei X ein aliphatischer, alicyclischer oder aromatischer Rest ist, vorzugsweise ein aliphatischer oder alicyclischer Rest mit 4 bis 18 C-Atomen.

Geeignete Diisocyanate sind beispielsweise: 1,5-Naphthylendiisocyanat, 4,4'-Diphenylmethandiisocyanat (= Methylen-diphenylen-diisocyanat, **MDI),** hydriertes MDI **(H**_{**12**}**MDI,** eine cyloaliphatische Verbindung), Xylylendiisocyanat **(XDI),** Tetramethylxylylendiisocyanat (**TMXDI**), 4,4'-Diphenyldimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat, die Isomeren des Toluylendiisocyanats **(TDI,** insbesondere das technische Isomerengemisch aus im wesentlichen 2,4- und 2,6-Toluylen-diisocyanat), 1-Methyl-2,4-diisocyanatocyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethyl-cyclohexan (Isophorondiisocyanat = **IPDI**), chlorierte und bromierte Diisocyanate, phosphorhaltige Diisocyanate, 4,4'-Diisocyanatophenylperfluorethan, Tetramethoxybutan-1,4-diisocyanat, Butan-1,4-diisocyanat, Hexamethylendiisocyanat (**HDI**), Dicyclohexylmethandiisocyanat, Cyclohexan-1,4-diisocyanat, Ethylen-diisocyanat, Phthalsäure-bis-isocyanatoethylester, ferner Diisocyanate mit reaktionsfähigen Halogenatomen, wie 1-Chlormethylpheny1-2,4-diisocyanat, 1-Brommethylphenyl-2,6-diisocyanat, 3,3-Bis-chlormethylether-4,4'-diphenyldiisocyanat. Schwefelhaltige Polyisocyanate erhält man beispielsweise durch Umsetzung von 2 mol Hexamethylen-diisocyanat mit 1 mol Thiodiglykol oder Dihydroxydihexylsulfid. Weitere wichtige Diisocyanate sind Trimethylhexamethylendiisocyanat, 1,4-Diisocyanatobutan, 1,12-Diisocyanatododecan und Dimerfettsäure-diisocyanat (Handelsprodukt "Sovermol DDI 1410" der Cognis Deutschland GmbH - früher der Henkel KgaA).

Besonders geeignete Diisocyanate sind: Tetramethylen-, Hexamethylen-, Undecan-, Dodecamethylen-, 2,2,4-Trimethylhexan-, 1,3-Cyclohexan-, 1,4-Cyclohexan-, 1,3-bzw. 1,4-Tetramethylxylol-, Isophoron-, 4,4-Dicyclohexylmethan- und Lysinester-Diisocyanat.

In einer Ausführungsform der vorliegenden Erfindung setzt man höherfunktionelle Isocyanate ein, worunter solche Isocyanate verstanden werden, die eine mittlere NCO-Funktionalität von mindestens 2,0 aufweisen. Insbesondere sei hier auf alle handelsüblichen Polyisocyanate (beispielsweise Polymer-MDI und dergleichen sowie die in **EP-A-438 836** offenbarten Polyisocyanate der Formeln 1 bis 7) verwiesen, die eine NCO-Funktionalität oberhalb von 2,0 aufweisen. Wie dem Fachmann bekannt spricht man von mittlerer NCO-Funktionalität, weil die entsprechenden höherfunktionellen Isocyanate nicht zwingend in Form chemisch einheitlicher Individuen wie etwa cyclotrimerisierten Isocyanaten vorliegen müssen, sondern - insbesondere bei handelsüblichen technischen Produkten - häufig Gemische verschiedener chemischer Individuen darstellen, die jeweils definierte NCO-Funktionalitäten aufweisen.

Bei der Umsetzung der (meth)acrylierten Verbindungen (a) mit aliphatischen und/oder aromatischen Isocyanaten zu den Polyurethanen (a*) wählt man die Umsetzungsverhältnisse der Komponenten (a) und der Isocyanate so, daß das Äquivalentverhältnis NCO : OH im Bereich von 0,03 : 1 bis 1,2 : 1 liegt. Vorzugsweise arbeitet man im Bereich von etwa 0,4 : 1.

In der vorliegenden Erfindung setzt man in der ersten Stufe des erfindungsgemäßen Verfahrens eine Kombination mindestens einer Verbindung (a) mit mindestens einer **Verbindung (c)** ein, mit der Maßgabe, dass es sich bei (c) um **Polyolester** handelt, die zwei oder mehr C=C-Doppelbindungen pro Molekül enthalten. Ausdrücklich sei in diesem Zusammenhang festgestellt, dass es sich bei den Verbindungen (c) um Substanzen handelt, die nicht unter die Definition der erfindungsgemäß einzusetzenden Substanzen (a) fallen, die also von den Substanzen (a) verschieden sind. Bei den Polyolestern (c) kann es sich sowohl um Vollester als auch um Partialester handeln, wobei in jedem Falle die oben genannte Bedingung gilt, daß pro Molekül Polyolester zwei oder mehr C=C-Doppelbindungen pro Molekül vorhanden sein müssen. Sofern man solche Komponenten (c) einsetzt, die neben den C=C-Doppelbindungen auch ein oder mehrere freie Hydroxylgruppen aufweisen, ist das oben bezüglich des NCO : OH Äquivalentverhältnisse Gesagte in der Weise anzuwenden, daß es für die Summe der Verbindungen (a) und (c) - anstatt für die Verbindungen (a) alleine -gilt. Dann entstehen in der ersten Stufe des erfindunggemäßen Verfahrens Polyurethane, die als Mischung von (a*) und (c*) zu bezeichnen sind, wobei (a*) die oben genannte Bedeutung hat und (c*) ganz analog die Polyurethane bedeutet, die sich aus der Umsetzung solcher Polyolester (c) mit Isocyanaten resultieren, die neben den C=C-Doppelbindungen auch ein oder mehrere freie Hydroxylgruppen aufweisen.

In einer Ausführungsform setzt man solche Verbindungen (c) ein, die durch Veresterung von Polyolen mit 2 bis 6 OH-Gruppen mit Acryl- und/oder Methacrylsäure erhältlich sind. In einer bevorzugten Ausführungsform enthalten die Verbindungen (c) als Polyol-Bausteine Polyole mit zwei 2 bis 6 OH-Gruppen und einem Molekulargewicht unterhalb von 1000. Beispiele für geeignete Polyol-Bausteine dieser Gruppe sind Ethylenglykol, Propylenglykol, Butandiol, Neopentylglykol, Glycerin, Trimethylolpropan, Zucker wie beispielsweise Pentaerythrit, Sorbit oder Glucose sowie ferner Polyalkylenglykole.

Als Verbindung (c) ist Dipropylenglycoldiacrylat besonders bevorzugt. Es sei ferner bemerkt, dass die erfindungsgemäß einzusetzenden Polyolester (c) allein oder in Kombination miteinander eingesetzt werden können.

In einer weiteren bevorzugten Ausführungsform der vorliegenden Erfindung setzt man in der zweiten Stufe des erfindungsgemäßen Verfahrens eine Kombination mindestens eines Polyurethans (a*) mit mindestens einem der genannten Polyolester (c) ein. Dabei kann es sich bei den in zweiter Stufe eingesetzten Verbindungen (c) sowohl um eigens den Verbindungen (a*) zudosierte Verbindungen (c) handeln, als auch um solche Verbindungen (c), die zwar in erster Stufe eingesetzt wurden, im Zuge der Urethanisierungsreaktion aber unverändert geblieben sind, weil sie von Hydroxylgruppen frei waren.

Die **Nachvernetzung** der im ersten Schritt des erfindungsgemäßen Verfahrens zunächst erhaltenen Polyurethane (a*) erfolgt in Gegenwart mindestens eines Radikalinitiators (b). Die Wahl dieses Initiators ist dabei an sich nicht kritisch. Vorzugsweise setzt man jedoch als Radikalinitiator ein organisches Peroxid ein. Solche organischen Peroxide sind in großer Zahl im Handel erhältlich. Beispielhaft sei hier auf die von der Firma Peroxid-Chemie GmbH vertriebenen Substanzen verwiesen, insbesondere Methyl-ethyl-keton-peroxid (MEKP), Acetyl-aceton-peroxid, Cyclohexanon-peroxid, Dibenzoyl-peroxid, tert.-Butylperoxybenzoat, Bis(4-tert.butylcyclohexyl)peroxydicarbonat, Dimyristyl-peroxy-dicarbonat, 2,5-dimethyl-2,5-di(2-ethylhexanoyl-peroxy)hexan, tert.-Amylperoxy-2-ethylhexanoat, Methylisobutyl-keton-peroxid, tert.-Butylperoxy-2-ethylhexanoat (TBPEH), Cumolhydroperoxid, tert.-Butylperisononanoat (TBPIN), tert.-Butylperoxy-benzoat, tert.-Butylcumyl-peroxid. Dabei sind MEKP, TBPEH und TBPIN besonders bevorzugt.

In einer Ausführungsform wird die Nachvernetzung des in der ersten Stufe des erfindungsgemäßen Verfahrens erhaltenen Polyurethans (a*) in Gegenwart von 0,1 bis 10 Gew.-% - bezogen auf das eingesetzte Polyurethan (a*) - eines oder mehrerer Radikalinitiatoren (b) durchgeführt. Die Nachvernetzung kann an sich nach allen einschlägigen dem Fachmann bekannten Methoden durchgeführt werden.

Bei geringen bis mittleren Temperaturen im Bereich von etwa 20-100 °C und insbesondere 20 bis 70 °C wird die Nachvernetzung vorzugsweise in Gegenwart eines Katalysators (= eines Reaktionsbeschleunigers) durchgeführt. Vorzugsweise setzt man als Katalysatoren **Übergangsmetallverbindungen (d)** ein. Dabei beträgt die Menge der Übergangsmetall-Verbindung - Metallgehalt der Übergangsmetall-Verbindung bezogen auf das in der ersten Stufe des erfindungsgemäßen Verfahrens erhaltene Polyurethan - 0,01 bis 1000 ppm. Im Hinblick auf die Art der Übergangsmetall-Verbindung besteht an sich keine besondere Einschränkung. Demnach können im Rahmen der Lehre der vorliegenden Erfindung prinzipiell alle dem Fachmann bekannten Übergangsmetall-Verbindungen eingesetzt werden. In einer Ausfiihrungsform setzt man als Übergangsmetall-verbindungen Übergangsmetallsalze ein, vorzugsweise Salze auf Basis von organischen Säuren mit 6-22 C-Atomen. In einer weiteren Ausführungsform setzt man solche Übergangsmetallverbindungen ein, deren Metalle ausgewählt sind aus der Gruppe Kobalt, Zirkon, Eisen, Blei, Mangan, Nickel, Chrom, Vanadin, Cer, Titan und Zinn. Besonders bevorzugt als Katalysator ist Cobalt-II-octoat, das insbesondere in Form einer Lösung, etwa in Phthalat, eingesetzt wird.

In einer weiteren Ausführungsform wird die Nachvemetzung in Abwesenheit eines Katalysators bei Temperaturen im Bereich von 60 bis 160 °C und insbesondere 120 bis 160 °C durchgeführt. Diese spezielle Art der Nachvemetzung ist als Warmhärtung anzusprechen. Von besonderem Vorteil ist die kurzfristige Erhitzung auf Temperaturen von etwa 150 °C; dabei werden typischerweise Reaktionszeiten im Bereich von nur wenigen Minuten benötigt. Ein besonderer Vorteil der Warmhärtung ist es, daß nachvemetzbare Harze, die die Komponenten (a*) - gewünschtenfalls in Kombination mit (c) und/oder (c*) - , und ferner (b) und gewünschtenfalls (e) enthalten, wesentlich lagerstabiler sind, als Systeme, die darüber hinaus auch zusätzlich die Komponente (d) enthalten.

In einer Ausführungsform führt man die zweite Stufe des erfindungsgemäßen Verfahrens in Gegenwart ein oder mehrerer mit den ungesättigten Polyurethanen (a*) **radikalisch copolymerisierbaren Verbindungen** (e) durch. Als Verbindungen (e) eignen sich dabei insbesondere Substanzen mit einer C=C-Doppelbindung pro Molekül, vorzugsweise Acrolein, Acrylamid, Vinylacetat und Styrol, wobei diese Verbindungen allein oder im Gemisch untereinander eingesetzt werden können.

In einer Ausführungsform führt man das erfindungsgemäße Verfahren in erster und/oder zweiter Stufe in Gegenwart von bis zu 20 Gew.-% - üblicher Kunststoffhilfsmittel durch - Gew.-% der Summe aller Kunststoffhilfsmittel bezogen auf die Gesamtmenge der eingesetzten Verbindungen (a). Solche Kunststoffhilfsmittel sind beispielsweise Verdickungsmittel, Verlaufshilfsmittel, Entschäumer, Gleitmittel, Füllmittel, UV-Stabilisatoren. Solche Hilfsmittel sind dem Fachmann hinreichend aus der Lack- bzw. Beschichtungs-Technologie bekannt. Es ist darauf zu achten, daß die eingesetzten Kunststoffhilfsmittel im wesentlichen keine freien Hydroxylgruppen aufweisen, sofern sie in der ersten Stufe des erfindungsgemäßen Verfahrens eingesetzt werden, damit sie nicht mit den in dieser Stufe eingesetzten Isocyanaten abreagieren.

In einer Ausführungsform zieht man eine Mischung der in der ersten Stufe des erfindungsgemäßen Verfahrens erhaltenen Polyurethane (a*) in Mischung mit den gewünschten Radikalinitiatoren (b) und gegebenenfalls zusätzlich den gewünschten Verbindungen (c) bis (e) in der gewünschten Schichtstärke auf ein festes Substrat auf und führt anschließend - sofort oder nach Lagerung - die Nachvernetzung durch. Als feste Substrate eignen sich dabei insbesondere Holz, Papier, Kunststoffoberflächen, mineralische Baustoffe wie Zement-Formsteine oder Zementfaserplatten, ferner Metalle oder beschichtete Metalle. Der Vorgang der Nachvemetzung, der auch als Aushärtung bezeichnet werden kann, kann gewünschtenfalls ein- oder mehrfach wiederholt werden. Das Aufbringen der Polyurethane in Mischung mit den gewünschten Radikalinitiatoren (b) und gegebenenfalls zusätzlich den gewüschten Verbindungen (c) bis (e) auf das feste Substrat erfolgt in bekannter Weise, etwa durch Spritzen, Spachteln, Rakeln, Bürsten, Rollen oder Gießen. Die Beschichtungsstärke liegt in der Regel im Bereich von 3 bis 500 g/m² und insbesondere 10 bis 200 g/m² bzw. Naßfilmdicken von etwa 3 bis 500 µm und insbesondere 50 bis 200 µm . Das Aufbringen kann dabei sowohl bei Raumtemperatur als auch bei erhöhter Temperatur, insbesondere jedoch nicht oberhalb von 100 °C erfolgen.

In einer weiteren Ausführungsform des erfindungsgemäßen Verfahrens führt man den zweiten Verfahrensschritt in der Weise durch, dass man Kunst- und/oder Naturfasern mit einer Mischung der Komponenten (a*), (b) und gewünschtenfalls (c) und/oder (c*) und/oder (e) und gewünschtenfalls Kunststoffhilfsmittel imprägniert und anschließend die radikalische Vernetzung durchführt. Diese Vorgehensweise orientiert sich an der sogenannten prepreg-Technologie. Unter "prepreg" wird ein mit thermo- oder duroplastischem Material vorimprägniertes Halbzeug verstanden, welches in einem weiteren Verarbeitungsschritt zum Fertigteil weiterverarbeitet wird. Zur Herstellung von prepregs werden Fasern in geeigneten Anlagen üblicherweise mit einer Harzmatrix imprägniert. Die prepregs können dann entweder direkt nach ihrer Herstellung oder nach einer gewissen Zeit der Zwischenlagerung zu den gewünschten Fertigteilen verarbeitet werden. Die genannte Ausführungsform der Erfindung zielt also darauf ab, Faserverbundwerkstoffe aus Fasern und einem Matrixmaterial bereitzustellen, bei denen das Matrixmaterial ein nach dem erfindungsgemäßen Verfahren zugängliches radikalisch nachvemetztes Polymer ist.

Ein weiterer Gegenstand der vorliegenden Erfindung ist die **Verwendung** von Polymeren erhältlich nach dem erfindungsgemäßen Verfahren als Matrixmaterial für Verbundstoffe auf Basis von Kunst- und/oder Naturfasern.

Ein weiterer Gegenstand der vorliegenden Erfindung ist ein **Werkstoff auf Polymer-Basis,** dadurch erhältlich, daß man in erster Stufe mindestens ein oder mehrere Verbindungen (a), die Umsetzungsprodukte von epoxidierten Fettsäurestem und/oder epoxidierten Triglyceriden mit Acrylsäure und/oder Methacrylsäure sind, durch Umsetzung mit aliphatischen und/oder aromatischen Isocyanaten in die entsprechenden Polyurethane (a*) überführt und die so hergestellten Polyurethane (a*) anschließend in einer zweiten Stufe in Gegenwart mindestens eines Radikalinitiators (b) radikalisch nachvernetzt.

Bezüglich der einzelnen Parameter und der obligatorisch beziehungsweise fakultativ einzusetzenden Substanzen bei der Herstellung des erfindungsgemäßen Werkstoffes gilt das oben bezüglich des erfindungsgemäßen Verfahrens bereits Gesagte.

In einer weiteren Ausfühnmgsform führt man die Herstellung des Werkstoffes auf Polymerbasis in zweiter Stufe im Sinne der oben genannten prepreg-Technologie in Gegenwart von Kunst- und/oder Naturfasern durch. Hinsichtlich der Fasern bestehen an sich keine speziellen Einschränkungen. So lassen sich sowohl synthetische Fasern, wie Glasfasern, Kohlenstofffasern, Metallfasern und dergleichen einsetzen, als auch natürliche Fasern. Im Rahmen der vorliegenden Erfindung sind dabei solche Fasern bevorzugt, die zumindest teilweise, vorzugsweise aber vollständig, Naturfasern enthalten. Die Naturfasern können in Form von Kurzfasern, Garnen, Rovings oder vorzugsweise textilen Flächengebilden in Form von Vliesen, Nadelvlies, Wirrvliesen, Geweben, Gelegen oder Gewirken eingesetzt werden. Die Naturfasern werden erfindungsgemäß vorzugsweise ausgewählt aus Flachs-, Hanf-, Stroh-, Holzwolle-, Sisal-, Jute-, Kokos-, Ramie-, Bambus-, Bast-, Zellulose-, Baumwolloder Wollfasern, Tierhaaren oder Fasern auf Basis von Chitin/Chitosan oder deren Kombination. Dabei sind solche Materialien bevorzugt, die vollständig oder teilweise Flachsfasern enthalten. In Bezug auf die prepregs beträgt der gewichtsmäßige Anteil an Fasermaterial - bezogen auf die Gesamtmenge der eingesetzten Verbindungen (a), (b) und gegebenenfalls (c) - zwischen 10 und 70 Gew.-%.

Die Fasern können mit allen dem Fachmann an sich bekannten Verfahren mit der Matrix in Kontakt gebracht werden, um auf diese Weise prepregs zu erhalten. Vorzugsweise werden die Fasern dabei in die Matrix getaucht, es sind aber auch Sprühverfahren möglich. Vorzugsweise setzt man solche Mischungen enthaltend (a*), (b) und gewünschtenfalls (c) ein, die eine Brookfield-Viskosität im Bereich von 600 bis 1400 mPas (gemessen mit Spindel 5 bei 10 Umdrehungen/min) aufweist. Die Viskositätswerte beziehen sich dabei jeweils auf die Auftragstemperatur. Die Matrix wird vorzugsweise bei Temperaturen im Bereich von 40-80 °C auf die Fasern aufgebracht, wobei es besonders vorteilhaft ist, solche Matrices auszuwählen, die bei einer Temperatur von 65 °C eine Brookfield-Viskosität im Bereich von 600 bis 1200 mPas aufweisen. Dabei kommt es noch nicht zu einer vollständigen Aushärtung der Matrix, so dass man zunächst prepregs erhält, die noch fast beliebig formbar sind, was deren weitere Verarbeitung erleichtert. Hinzu kommt, dass diese prepregs bei Raumtemperatur und Luftzutritt nicht so schnell aushärten wie die aus dem Stand der Technik bekannten prepregs und somit eine deutlich erhöhte Lagerstabilität aufweisen.

Die wie gerade beschrieben zugänglichen Werkstoffe, bei denen man die Herstellung in zweiter Stufe in Gegenwart von Kunst- und/oder Naturfaser durchführt, können als Faserverbundwerkstoffe bezeichnet werden. Diese Faserverbundwerkstoffe besitzen aufgrund ihrer ausgezeichneten anwendungstechnischen Eigenschaften eine Reihe von Anwendungsfeldern. Dementsprechend ist ein weiterer Gegenstand der vorliegenden Erfindung die Verwendung dieser Faserverbundwerkstoffe zur Herstellung von Bauteilen für den Fahrzeugbau, den Flugzeugbau, die Bauindustrie, den Fensterbau, die Möbelindustrie, die Elektroindustrie, Sportgeräte, Spielzeug, der Maschinen- und Apparatebau, die Verpackungsindustrie, die Landwirtschaft oder die Sicherheitstechnik.

### Beispiele

### A) Verwendete Substanzen

### A1) Produkte der Firma Cognis Deutschland GmbH

| | |
|---|---|
| **Photomer 3005 F** | Ringöffnungsprodukt von epoxidiertem Sojabohnenöl mit Acrylsäure |
| **Photomer 4226** | Dipropylenglykol-diacrylat |

### A2) Sontige Produkte

| | |
|---|---|
| **Beschleuniger C-101** | Lösung von Cobalt-II-octoat in Phtahlat; Co-Gehalt = 1 Gew.% (Fa. Peroxid-Chemie-GmbH) |
| **Vestanat IPDI** | Isophorondiisocyanat; NCO-Gehalt = 37,5-37,8% (Fa. Hüls AG) |
| **TBPIN** | tert.-Butylperisononanoat (Fa. Peroxid-Chemie-GmbH) |
| **TBPEH** | tert.-Butylperoxy-2-ethylhexanoat (Fa. Peroxid-Chemie-GmbH) |
| **MEKP** | Methyl-ethyl-Keton-peroxid (Fa. Peroxid-Chemie-GmbH) |

### B) Herstellung der Polyurethane

### (Stufe 1 des erfindungsgemäßen Verfahrens)

### Zwischenprodukt 1 (ZW1)

Zu einem Gemisch von 700 g Photomer 3005 F und 300 g Photomer 4226 wurden im Verlauf von 30 min 100 g Isophorondiisocyanat bei 80 °C zugetropft. Die Mischung wurde anschließend auf 80 °C erhitzt und bei dieser Temperatur 30 min gerührt. Anschließend ließ man abkühlen. Das erhaltene Produkt, nachfolgend als Zwischenprodukt 1 bezeichnet, wurde als gelb-braune Flüssigkeit erhalten.

### Zwischenprodukt 2 (ZW2)

Zu einem Gemisch von 700 g Photomer 3005 F und 300 g Photomer 4226 wurden im Verlauf von 30 min 50 g Isophorondiisocyanat bei 80 °C zugetropft. Die Mischung wurde anschließend auf 80 °C erhitzt und bei dieser Temperatur 30 min gerührt. Anschließend ließ man abkühlen. Das erhaltene Produkt, nachfolgend als Zwischenprodukt 2 bezeichnet, wurde als gelb-braune Flüssigkeit erhalten.

### C) Radikalische Nachvernetzung

### (Stufe 2 des erfindungsgemäßen Verfahrens)

### Beispiel 1

100 Gewichtsteile des Zwischenproduktes 1 wurden mit je 2 Gewichtsteilen TBPIN und TBPEH gemischt. Die Mischung wurde anschließend 30 min bei 140 °C ausgehärtet. Das dabei erhaltene Polymer wies eine Shore D Härte von 78 auf.

### Beispiel 2

100 Gewichtsteile des Zwischenproduktes 1 wurden mit 4 Gewichtsteilen MEKP und 0,25 Gewichtsteilen Beschleuniger C-101 versetzt. Anschließend ließ man 30 min bei 75 °C aushärten. Das erhaltene Polymer hatte eine Shore D Härte von 75.

### Beispiel 3

100 Gewichtsteile des Zwischenproduktes 2 wurden mit 4 Gewichtsteilen MEKP und 0,25 Gewichtsteilen Beschleuniger C-101 versetzt. Anschließend ließ man 30 min bei 75 C aushärten. Das erhaltene Polymer hatte eine Shore D Härte von 65.

### Beispiel 4

100 Gewichtsteile des Zwischenproduktes 1 wurden mit 4 Teilen MEKP und 0,25 Gewichtsteilen Beschleuniger C-101 versetzt und anschließend 6 Tage bei 20 °C ausgehärtet. Das erhaltene Polymer wies eine Shore D Härte von 45 auf.

## Patentansprüche

1. Verfahren zur Herstellung radikalisch nachvemetzter Polymere, wobei man in erster Stufe mindestens ein oder mehrere Verbindungen (a), die Umsetzungsprodukte von epoxidierten Fettsäurestem und/oder epoxidierten Triglyceriden mit Acrylsäure und/oder Methacrylsäure sind, durch Umsetzung mit aliphatischen und/oder aromatischen Isocyanaten in die entsprechenden Polyurethane (a*) überführt und die so hergestellten Polyurethane (a*) anschließend in einer zweiten Stufe in Gegenwart mindestens eines Radikalinitiators (b) radikalisch nachvemetzt, mit der Maßgabe, dass man in der ersten Stufe eine Kombination mindestens einer Verbindung (a) mit mindestens einer Verbindung (c) einsetzt, wobei es sich bei (c) um Polyolester handelt, die zwei oder mehr C=C-Doppelbindungen pro Molekül enthalten.

2. Verfahren nach Anspruch 1, wobei man in der zweiten Stufe eine Kombination mindestens einer Verbindung (a*) mit mindestens einer Verbindung (c) einsetzt, mit der Maßgabe, daß es sich bei (c) um Polyolester handelt, die zwei oder mehr C=C-Doppelbindungen pro Molekül enthalten.

3. Verfahren nach Anspruch 1 oder 2, wobei man in der zweiten Stufe, die radikalische Nachvemetzung in Gegenwart eines Radikalinitiators durchführt, der ausgewählt ist aus der Gruppe tert.-Butylperisononanoat, tert.-Butylperoxy-2-ethylhexanoat und Methyl-ethyl-keton-peroxid.

4. Verfahren nach einem der Ansprüche 1 bis 3, wobei man in der zweiten Stufe die radikalische Nachvemetzung in Gegenwart einer Übergangsmetallverbindung (d) durchführt.

5. Verfahren nach einem der Ansprüche 1 bis 4, wobei man in der zweiten Stufe die radikalische Nachvemetzung in Gegenwart ein oder mehrerer mit den Verbindungen (a*) copolymerisierbaren Verbindung (e) durchführt, die ausgewählt sind aus der Gruppe Acrolein, Acrylamid, Vinylacetat und Styrol.

6. Verfahren nach einem der Ansprüche 1 bis 5, wobei man in erster und/ oder zweiter Stufe in Gegenwart von bis zu 20 Gew.-% an Kunststoffhilfsmitteln arbeitet - Gew.-% der Summe aller Kunststoffhilfsmittel bezogen auf die Gesamtmenge der eingesetzten Verbindungen (a).

7. Verwendung von Polymeren erhältlich nach dem Verfahren gemäß einem der Ansprüche 1 bis 6 als Matrixmaterial für Verbundstoffe auf Basis von Kunst- und/oder Naturfasern.

8. Werkstoff auf Polymer-Basis, dadurch erhältlich, daß man in erster Stufe mindestens ein oder mehrere Verbindungen (a), die Umsetzungsprodukte von epoxidierten Fettsäurestem und/oder epoxidierten Triglyceriden mit Acrylsäure und/oder Methacrylsäure sind, durch Umsetzung mit aliphatischen und/oder aromatischen Isocyanaten in die entsprechenden Polyurethane (a*) überführt und die so hergestellten. Polyurethane (a*) anschließend in einer zweiten Stufe in Gegenwart mindestens eines Radikalinitiators (b) radikalisch nachvemetzt, mit der Maßgabe, dass man in der ersten Stufe eine Kombination mindestens einer Verbindung (a) mit mindestens einer Verbindung (c) einsetzt, wobei es sich bei (c) um Polyolester handelt, die zwei oder mehr C=C-Doppelbindungen pro Molekül enthalten.

9. Werkstoff nach Anspruch 8, wobei man die Herstellung in erster und/oder zweiter Stufe in Gegenwart von bis zu 20 Gew.-% üblicher Kunstoffhilfsmittel - Gew.-% der Summe aller Kunstoffhilfsmittel bezogen auf die Gesamtmenge der eingesetzten Verbindungen (a) - durchführt.

10. Werkstoff nach Anspruch 8 oder 9, wobei man die Herstellung in zweiter Stufe in Gegenwart von 10 bis 70 Gew.-% an Kunst- und/oder Naturfasern - Gew.-% der Summe aller Fasern bezogen auf die Gesamtmenge der eingesetzten Verbindungen (a), (b) und gegebenenfalls (c) und gegebenenfalls (e) - durchführt.

11. Verwendung der Werkstoffe nach Anspruch 10 zur Herstellung von Bauteilen für den Fahrzeugbau, den Flugzeugbau, die Bauindustrie, den Fensterbau, die Möbelindustrie, die Elektroindustrie, Sportgeräte, Spielzeuge, den Maschinen- und Apparatebau, die Verpackungsindustrie, die Landwirtschaft oder die Sicherheitstechnik.

## Claims

1. A process for the production of radically post-crosslinked polymers, **characterized in that**, in a first stage, at least one or more compounds (a) which are reaction products of epoxidized fatty acid esters and/or epoxidized triglycerides with acrylic acid and/or methacrylic acid are converted into the corresponding polyurethanes (a*) by reaction with aliphatic and/or aromatic isocyanates and, in a second stage, the polyurethanes (a*) thus produced are subsequently subjected to radical post-crosslinking in the presence of at least one radical initiator (b), with the proviso that a combination of at least one compound (a) with at least one compound (c) is used in the first stage, (c) being selected from polyol esters which contain two or more C=C double bonds per molecule.

2. A process as claimed in claim 1, **characterized in that** a combination of at least one compound (a*) with at least one compound (c) is used in the second stage, with the proviso that (c) is selected from polyol esters which contain two or more C=C double bonds per molecule.

3. A process as claimed in claim 1 or 2, **characterized in that**, in the second stage, the radical post-crosslinking is carried out in the presence of a radical initiator selected from the group consisting of tert.butylperisononanoate, tert.butylperoxy-2-ethylhexanoate and methyl ethyl ketone peroxide.

4. A process as claimed in any of claims 1 to 3, **characterized in that**, in the second stage, the radical post-crosslinking is carried out in the presence of a transition metal compound (d).

5. A process as claimed in any of claims 1 to 4, **characterized in that**, in the second stage, the radical post-crosslinking is carried out in the presence of one or more compounds (e) copolymerizable with the compounds (a*) selected from the group consisting of acrolein, acrylamide, vinyl acetate and styrene.

6. A process as claimed in any of claims 1 to 5, **characterized in that** the first and/or second stage is carried out in the presence of up to 20% by weight of additives for plastics - % by weight of the sum of all plastic additives, based on the total quantity of the compounds (a) used.

7. The use of polymers obtainable by the process claimed in any of claims 1 to 6 as a matrix material for composites based on synthetic and/or natural fibers.

8. A polymer-based material obtainable by a process in which, in a first stage, at least one or more compounds (a) which are reaction products of epoxidized fatty acid esters and/or epoxidized triglycerides with acrylic acid and/or methacrylic acid are converted into the corresponding polyurethanes (a*) by reaction with aliphatic and/or aromatic isocyanates and, in a second stage, the polyurethanes (a*) thus produced are subsequently subjected to radical post-crosslinking in the presence of at least one radical initiator (b), with the proviso that a combination of at least one compound (a) with at least one compound (c) is used in the first stage, (c) being selected from polyol esters which contain two or more C=C double bonds per molecule.

9. A material as claimed in claim 8, **characterized in that** the first and/or second stage of its production is/are carried out in the presence of up to 20% by weight of additives typical of plastics - % by weight of the sum of all plastic additives, based on the total quantity of the compounds (a) used.

10. A material as claimed in claim 8 or 9, **characterized in that** the second stage of its production is carried out in the presence of 10 to 70% by weight of synthetic and/or natural fibers - % by weight of the sum of all fibers, based on the total quantity of the compounds (a), (b) and optionally (c) and optionally (e) used.

11. The use of the materials claimed in claim 10 for the production of structural components for vehicle and aircraft construction, the building industry, window manufacture, the furniture industry, the electronics industry, sports equipment, toys, machine construction, the packaging industry, agriculture or the safety sector.

## Revendications

1. Procédé de production de polymères post-réticulés par réaction radicalaire, selon lequel dans une première étape on transforme un ou plusieurs composés (a), qui sont des produits de réaction d'esters d'acides gras époxydés et/ou de triglycérides époxydés avec de l'acide acrylique et/ou de l'acide méthacrylique, en les polyuréthanes (a*) correspondants par réaction avec des isocyanates aliphatiques et/ou aromatiques, puis dans une seconde étape on soumet les polyuréthanes (a*) ainsi produits à une post-réticulation radicalaire en présence d'au moins un initiateur radicalaire (b), étant précisé que dans la première étape on utilise une combinaison d'au moins un composé (a) avec au moins un composé (c), (c) étant des esters de polyol contenant au moins deux doubles-liaisons C=C par molécule.

2. Procédé selon la revendication 1,
selon lequel
dans la seconde étape on utilise une combinaison d'au moins un composé (a*) avec au moins un composé (c), étant précisé que (c) étant des esters de polyol qui contiennent au moins deux doubles-liaisons C=C par molécule.

3. Procédé selon la revendication 1 ou 2,
selon lequel
dans la seconde étape, on procède à la post-réticulation radicalaire en présence d'un initiateur radicalaire choisi dans le groupe du perisononanoate de tert.-butyle, du peroxy-2-éthylhexanoate de tert.-butyle et du peroxyde de méthyl-éthyl-cétone.

4. Procédé selon l'une des revendications 1 à 3,
selon lequel
dans la seconde étape on effectue la post-réticulation radicalaire en présence d'un composé de métal de transition (d).

5. Procédé selon l'une des revendications 1 à 4,
selon lequel
dans la seconde étape on effectue la post-réticulation radicalaire en présence d'un ou plusieurs composé(s) (e) copolymérisables avec les composés (a*), et qui sont choisis dans le groupe constitué par l'acroléine, l'acrylamide, l'acétate de vinyle et le styrène.

6. Procédé selon l'une des revendications 1à 5,
selon lequel
dans la première et/ou la seconde étape on travaille en présence d'une quantité allant jusqu'à 20% en poids d'adjuvants de synthèse - pourcentage pondéral de la somme de tous les adjuvants de synthèse par rapport à la quantité totale des composés (a) utilisés.

7. Utilisation de polymères que l'on peut obtenir par le procédé selon l'une des revendications 1 à 6,
comme matériau de matrice pour composites à base de fibres synthétiques et/ou naturelles.

8. Matériau à base de polymère, que l'on peut obtenir en transformant dans une première étape au moins un ou plusieurs composés (a), qui sont des produits de réaction d'esters d'acides gras époxydés et/ou de triglycérides époxydés avec l'acide acrylique et/ou l'acide méthacrylique, en les polyuréthanes (a*) correspondants par réaction avec des isocyanates aliphatiques et/ou aromatiques puis dans une seconde étape en effectuant une post-réticulation radicalaire des polyuréthanes (a*) ainsi produits en présence d'au moins un initiateur radicalaire (b), étant précisé que dans la première étape on utilise une combinaison d'au moins un composé (a) avec au moins un composé (c), (c) étant des esters de polyol contenant au moins deux doubles liaisons C=C par molécule.

9. Matériau selon la revendication 8,
selon lequel
on effectue la production dans la première et/ou la seconde étape en présence d'une quantité allant jusqu'à 20 % en poids d'adjuvants de synthèse habituels - pourcentage pondéral de la somme de tous les adjuvants de synthèse par rapport à la quantité totale des composés (a) employés.

10. Matériau selon la revendication 8 ou 9,
selon lequel
on effectue la production dans la seconde étape en présence de 10 à 70 % en poids de fibres synthétiques et/ou naturelles - pourcentage pondéral de la somme de toutes les fibres par rapport à la quantité totale des composés (a), (b), le cas échéant (c) et le cas échéant (e) utilisés.

11. Utilisation des matériaux selon la revendication 10, pour la production de pièces pour l'industrie automobile, la construction aéronautique, l'industrie du bâtiment, la construction des fenêtres, l'industrie du meuble, l'industrie électrique, les appareils de sport, les jouets, la construction des machines et appareils, l'industrie de l'emballage, l'agriculture ou la technique de sécurité.
